# FASCICULE DE BREVET EUROPEEN

(11) **EP 2 118 816 B1**
(45) Date de publication et mention de la délivrance du brevet: **19.05.2010**
(21) Numéro de dépôt: 08775549.2
(22) Date de dépôt: 12.02.2008
(51) Int. Cl.: G06K 9/00

(54) **DISPOSITIF DE CAPTURE BIOMETRIQUE SECURISE**
GESICHERTE BIOMETRISCHE SENSORVORRICHTUNG
SECURED BIOMETRIC SENSOR DEVICE

(30) Priorité: 14.02.2007 FR 0701082
(43) Date de publication de la demande: 18.11.2009
(73) Titulaire: SAGEM Sécurité, 75015 Paris (FR)
(72) Inventeur: SALIBA, Eric, 78400 Chatou (FR); DUFRESNE DE VIREL, François, 75013 Paris (FR)
(74) Mandataire: Lavialle, Bruno François Stéphane
(86) Numéro de dépôt international: PCT/FR2008/000175
(87) Numéro de publication internationale: WO 2008/129147

(56) Documents cités:
- EP-A2- 0 786 745
- EP-A2- 1 434 162
- DE-A1- 19 705 518
- US-A1- 2004 085 188

## Description

La présente invention concerne un dispositif de capture d'une image d'une empreinte digitale, d'un iris d'un oeil, d'un visage ou autre par exemple à des fins d'identification ou d'authentification de la personne dont la partie de corps figure sur l'image.

### ARRIERE PLAN DE L'INVENTION

Un dispositif de capture biométrique optique comporte généralement un capteur optique tel qu'une caméra et une unité de commande, électronique, reliée au capteur pour commander celui-ci. L'unité de commande est agencée pour piloter la capture de l'image par le capteur, traiter l'image et en extraire des caractéristiques de la partie de corps capturée, afin de :
- les comparer à des caractéristiques mémorisées dans le dispositif ou importées via une communication externe sécurisée, ou
- les exporter vers un dispositif de comparaison via une communication sécurisée.

La comparaison sert à identifier la personne à qui appartient cette partie du corps ou à vérifier que les caractéristiques de la partie de corps figurant sur l'image appartiennent ou non à l'une des personnes autorisées à accéder à un lieu ou un service. Un fraudeur pourrait tenter d'intervenir sur l'unité de commande pour accéder aux algorithmes de comparaison ou aux algorithmes de codage permettant de chiffrer les caractéristiques avant de les exporter, ou plus généralement à des paramètres de fonctionnement de l'unité de commande. L'unité de commande est donc un des composants essentiels du dispositif, qu'il est nécessaire de sécuriser afin d'empêcher une intervention sur celle-ci par une personne non autorisée qui souhaiterait frauder l'identification ou l'authentification.

Il est connu d'incorporer l'unité de commande dans un élément de protection passif tel qu'une résine ou actif tel qu'un maillage ou un film résistif (voir par exemple les documents FR-A-2 805 074 et FR-A-2 824 697) de manière que toute manipulation ou altération physique non autorisée sur l'unité de commande entraîne une altération de l'élément de protection révélant l'intervention. Cette solution n'est cependant pas pratique, par exemple parce qu'elle introduit des contraintes de conception du dispositif (encombrement, positionnement), de compatibilité avec les rayons lumineux, de passages de câbles ou nappes électriques, nécessitant des discontinuités dans l'élément de protection et permettant un accès potentiel aux éléments protégés.

### OBJET DE L'INVENTION

Un but de l'invention est de proposer un dispositif de capture protégé contre des interventions non autorisées sur celui-ci.

### RESUME DE L'INVENTION

A cet effet, on prévoit, selon l'invention, un dispositif de capture de caractéristiques biométriques, comprenant un capteur optique ayant un champ couvrant une zone de détection des caractéristiques biométriques et une unité de commande, électronique, reliée au capteur pour commander celui-ci. L'unité de commande est disposée au moins partiellement dans le champ du capteur et comprend une mémoire contenant au moins une signature résultant d'au moins une caractéristique optique de référence de l'unité de commande vue par le capteur et un module de comparaison de la signature mémorisée avec une signature obtenue à partir d'au moins une caractéristique optique de l'unité de commande fournie par le capteur.

Ainsi, le capteur peut détecter des caractéristiques optiques de l'unité de commande qui forment par elles-mêmes une signature ou à partir desquelles il est possible d'élaborer une signature. La comparaison d'une signature mémorisée à une signature résultant de caracté ristiques optiques détectées ultérieurement permet donc de révéler une altération de ces caractéristiques optiques. En effet, en cas d'intervention sur l'unité de commande, la signature résultant des caractéristiques optiques fournies par le capteur est différente de la signature mémorisée de sorte que la comparaison des signatures révèle l'intervention. Utiliser le capteur de caractéristiques biométriques permet de ne pas devoir ajouter un capteur dédié à la détection de l'intervention rendant la structure du dispositif plus simple, compacte et moins coûteuse.

De préférence, le module de comparaison est agencé également pour comparer des caractéristiques biométriques fournies par le capteur à des caractéristiques biométriques mémorisées.

Ainsi, le module de comparaison sert à la fois au contrôle des caractéristiques biométriques et à la vérification de l'intégrité de l'unité de commande. Il n'y a dès lors pas de module de comparaison dédié, ce qui simplifie la structure du dispositif et rend celui-ci compact et relativement peu coûteux.

Selon un mode de réalisation particulier, le dispositif comprend un miroir disposé entre le capteur, l'unité de commande et la zone de détection et agencé pour permettre une visualisation de ces dernières par réflexion pour l'une et par transmission pour l'autre, le miroir étant de préférence un miroir semi-réfléchissant.

L'utilisation du miroir donne plus de liberté dans le positionnement de l'unité de commande par rapport au capteur.

Avantageusement, le dispositif comprend un organe réfléchissant entourant au moins partiellement l'unité de commande, l'organe réfléchissant comprenant de préférence une pluralité de facettes réfléchissantes formant des angles entre elles de manière à fournir au capteur différents angles de vue de l'unité de commande.

L'organe réfléchissant permet au capteur de détecter des caractéristiques optiques de l'unité de commande simultanément selon différents angles de vue.

Avantageusement encore, l'unité de commande est recouverte d'une couche de protection ayant des caractéristiques optiques détectables par le capteur. De préférence, la couche de protection est en un matériau non opaque incorporant des éléments optiquement détectables comprenant de préférence des paillettes réfléchissantes, au moins un élément d'illumination de l'unité de commande étant, de préférence encore, noyé dans la couche de protection et, toujours de préférence, le matériau de la couche de protection est visqueux.

La couche de protection permet d'amplifier visuellement les traces qu'une intervention non autorisée peut laisser sur l'unité de commande. Par "élément optiquement détectable" on entend tout élément susceptible d'émettre, réémettre ou renvoyer un flux optique notamment lorsqu'il est illuminé par une source extérieure ou qu'il est lui-même émetteur de flux lumineux.

Selon deux aspects particuliers de l'invention :
- le dispositif comprend une pluralité d'éléments d'illumination de l'unité de commande qui sont pilotés par le module de comparaison selon différentes configurations correspondants chacune à au moins une signature mémorisée ;
- la mémoire contient une pluralité de signatures résultant de plusieurs caractéristiques optiques de référence et le module de comparaison est agencé pour sélectionner une des signature mémorisées, isoler les caractéristiques optiques correspondantes parmi celles détectées par le capteur et comparer une signature résultant de celles-ci à la signature mémorisée sélectionnée.

Ainsi, la comparaison porte sur une des signatu res sélectionnée de façon aléatoire ou non, de sorte qu'il est possible d'avoir un grand nombre de signatures en mémoire avec une durée de comparaison raisonnable, un fraudeur ne pouvant déterminer quelles caractéristiques optiques de l'unité de commande seront utilisées pour la signature qui sera comparée à la signature mémorisée sélectionnée. Il est de la sorte encore plus difficile de réaliser une intervention non autorisée sur l'unité de commande sans que celle-ci puisse être détectée.

D'autres particularités et avantages de l'invention ressortiront à la lecture de la description qui suit d'un mode de réalisation particulier, non limitatif de l'invention.

### BREVE DESCRIPTION DES DESSINS

Il sera fait référence aux dessins annexés, parmi lesquels :
- la figure 1 est une vue schématique, de coté et en coupe, d'un dispositif de capture conforme à un premier mode de réalisation de l'invention,
- la figure 2 est une vue agrandie, de face, de l'unité de commande de ce dispositif,
- la figure 3 est une vue analogue à celle de la figure 1 d'une première variante de réalisation du dispositif,
- la figure 4 est une vue analogue à celle de la figure 1 d'une deuxième variante de réalisation du dispositif,
- la figure 5 est une vue analogue à celle de la figure 1 d'une troisième variante de réalisation du dispositif,
- la figure 6 est une vue schématique analogue à la figure 1 d'un dispositif de capture conforme à un deuxième mode de réalisation,
- les figures 7 et 8 sont des vues analogues à la figure 6 d'une première et d'une deuxième variantes du deuxième mode de réalisation.

### DESCRIPTION DETAILLEE DE L'INVENTION

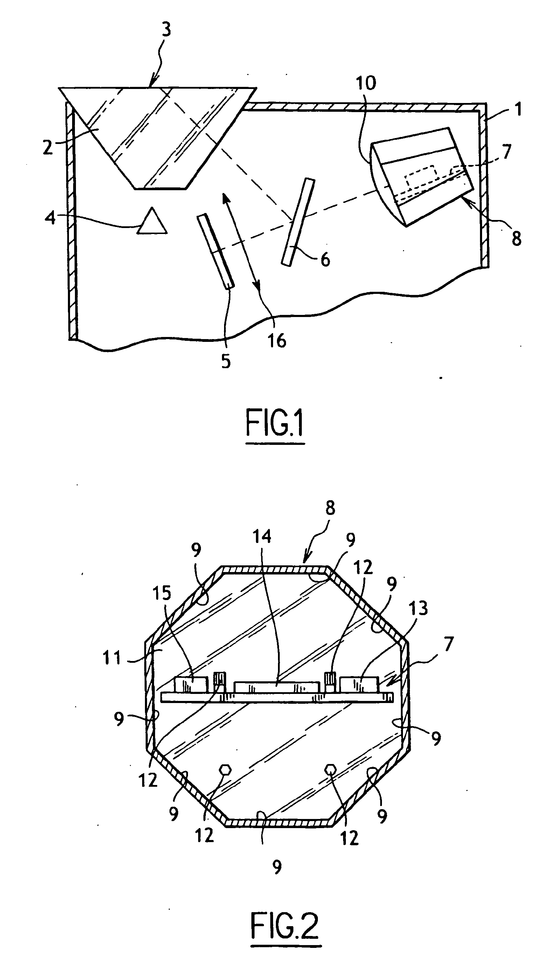

En référence aux figures 1 et 2, le dispositif de capture conforme au premier mode de réalisation de l'invention est ici agencé pour assurer une identification par reconnaissance d'empreintes digitales.

Le dispositif comprend un boîtier 1 sur lequel est monté de façon connue en elle-même un prisme 2 ayant une surface supérieure servant de surface d'appui d'un des doigts du candidat à l'identification. La surface supérieure du prisme 2 est donc la zone de détection 3 de l'empreinte.

Une source lumineuse 4 est disposée sous le prisme 2 pour illuminer la zone de détection 3.

Le dispositif de capture comprend un capteur 5 appartenant ici à une caméra non représentée disposée pour que le capteur 5 ait un champ couvrant la zone de détection 3.

Un miroir 6 semi-réfléchissant est disposé entre le capteur 5 et le prisme 2, dans le champ du capteur 5, pour définir un chemin optique entre le capteur 5 et la zone de détection 3 de sorte que la zone de détection 3 est dans le champ du capteur 5 après une réflexion sur le miroir 6. Le miroir 6 est agencé pour réfléchir les rayons lumineux ayant une longueur d'ondes comprise dans une première plage de valeurs et pour transmettre les rayons lumineux ayant une longueur d'ondes comprise dans une deuxième plage de valeurs.

Le positionnement du prisme 2, du capteur 5 et du miroir 6 est connu en lui-même. Un élément optique de focalisation 16 est disposé entre le capteur 5 et le miroir 6 pour focaliser l'image de la zone de détection 3 sur le capteur 5.

Le dispositif de capture comprend en outre une unité de commande 7, électronique, reliée au capteur 5 et à la source lumineuse 4.

L'unité de commande 7 est disposée du côté du miroir 6 opposé au capteur 5 de manière que l'unité de commande 7 se trouve dans le champ du capteur 5 du fait de la transmission optique au travers du miroir 6.

L'unité de commande 7 est disposée dans une cavité d'un organe réfléchissant 8 ayant des facettes réfléchissantes 9 agencées selon un tronc de pyramide à base polygonale. La cavité est fermée par une lentille 10 agencée pour assurer une focalisation de l'image de l'unité de commande 7 sur le capteur 5. La cavité de l'organe réfléchissant 8 est remplie d'une résine enveloppant l'unité de commande 7 en formant une couche de protection 11 autour de celle-ci. La résine est ici visqueuse, transparente et incorpore des éléments optiquement détectables, à savoir ici des paillettes réfléchissantes, dispersés aléatoirement dans la résine. La couche de protection 11 possède ainsi des caractéristiques optiques détectables par le capteur 5. Des diodes 12 électroluminescentes sont disposées dans la cavité et sont noyées dans la résine de la couche de protection 11. Certaines diodes 12 sont ici montées directement sur l'unité de commande 7 et d'autres sont disposées à distance de l'unité de commande 7 (mais toutes pourraient être montées sur l'unité de commande 7 ou à distance de celle-ci). Les diodes 12 sont des éléments d'illumination de l'unité de commande 7 et sont reliés à l'unité de commande 7.

L'unité de commande 7 comprend une mémoire 13 contenant une base de données mettant en relation des caractéristiques d'empreinte avec l'identité de leurs pro-priétaires et un module de traitement 14, à savoir un processeur, agencé et programmé pour :
- piloter la capture d'une image de l'empreinte en commandant la source lumineuse 4 et le capteur 5,
- extraire de l'image de l'empreinte des caractéristiques et coder celles-ci,
- comparer les caractéristiques ainsi codées aux caractéristiques enregistrées dans la mémoire 13.

L'unité de commande 7 comprend en outre une mémoire 15 contenant des signatures résultant de caractéristiques optiques de référence de l'unité de commande 7. Les caractéristiques optiques de référence ont été capturées par le capteur 5 lors d'une étape d'initialisation du dispositif. A chaque signature correspond une configuration d'allumage des diodes 12. Les différentes configurations d'allumage dépendent de l'intensité lumineuse, des longueurs d'ondes et de la répartition des diodes 12 allumées. Chaque signature est par exemple constituée :
- de l'ensemble des caractéristiques optiques détectées par le capteur pour la configuration d'allumage concernée,
- d'une sélection des caractéristiques optiques en fonction par exemple des zones du capteur où elles ont été détectées,
- d'une information numérique extraite des caractéristiques optiques (par exemple un taux de contraste moyen, une fréquence, une intensité...) ou calculée par exemple en fonction d'une répartition géographique de niveaux de brillance...

Le module de traitement 14 est agencé pour former un module de comparaison :
- d'une signature résultant de caractéristiques optiques de l'unité de commande 7 capturées par le capteur 5 avec une des configurations prédéterminées d'allumage des diodes 12, et
- des caractéristiques visuelles de référence mémorisées et correspondant à la configuration d'allumage.

L'unité de commande 7, le capteur 5 et la source lumineuse 4 sont reliés à une source d'alimentation en énergie électrique non représentée sur les figures.

Au démarrage du dispositif de capture et/ou périodiquement, le module de traitement 14 commande le capteur 5 et les diodes 12 pour obtenir des caractéristiques optiques de l'unité de commande avec une configuration d'allumage prédéterminée. De préférence, une même configuration d'allumage n'est pas utilisée deux fois de suite.

Le module de traitement 14 extrait la signature des caractéristiques optiques détectées et la compare à la signature mémorisée pour la même configuration d'allumage.

Si le résultat de la comparaison est positif, le dispositif de capture continue de fonctionner normalement.

Si le résultat de la comparaison est négatif, le module de traitement 14 commande l'arrêt du fonctionnement du dispositif de capture.

Les facettes réfléchissantes 9 de l'organe réfléchissant 8 forment des angles entre elles de manière à fournir simultanément au capteur 5 différents angles de vue de l'unité de commande 7. Les caractéristiques optiques détectées par le capteur 5 ne sont donc pas constitutives d'une image fidèle de l'unité de commande 7 mais d'une image composée d'images partielles selon différents angles de vue.

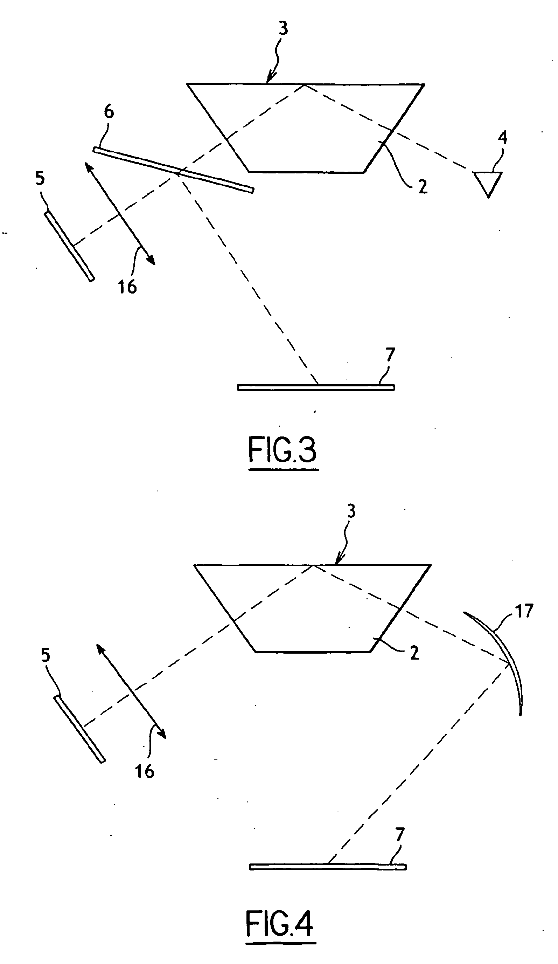

Les éléments identiques ou analogues à ceux précédemment décrits porteront la même référence numérique dans la description qui suit de variantes de réalisation illustrées sur les figures 3 à 5.

Conformément à une première variante représentée sur la figure 3, les capteurs 5, l'élément optique de focalisation 16 et le miroir 6 sont disposés successivement en regard d'une face latérale du prisme de telle manière que le capteur 5 ait un champ couvrant à la fois la zone de détection 3 du prisme 2 et la surface supérieure de l'unité de commande 7 disposée sous le prisme 2. La source lumineuse 4 est disposée en regard d'une autre face latérale du prisme 2 pour illuminer la zone de détection 3. Les différents constituants du dispositif sont disposés de telle manière que la zone de détection 3 et la surface supérieure de l'unité de commande 7 se conjuguent avec la surface du capteur 5 via l'élément optique de focalisation 16.

Cette variante de réalisation est particulièrement simple.

Selon une deuxième variante de réalisation représentée à la figure 4, le capteur 5 et l'élément optique de focalisation 16 sont disposés successivement en regard d'une facette latérale du prisme 2 de manière que la zone de détection 3 soit couverte par le champ du capteur 5. Un miroir 17, ayant une puissance optique, est disposé en regard de la face latérale opposée du prisme 2 pour refléter sur le capteur 5 via l'élément optique 16 et le prisme 2 la surface supérieure de l'unité de commande 7 disposée sous le prisme 2.

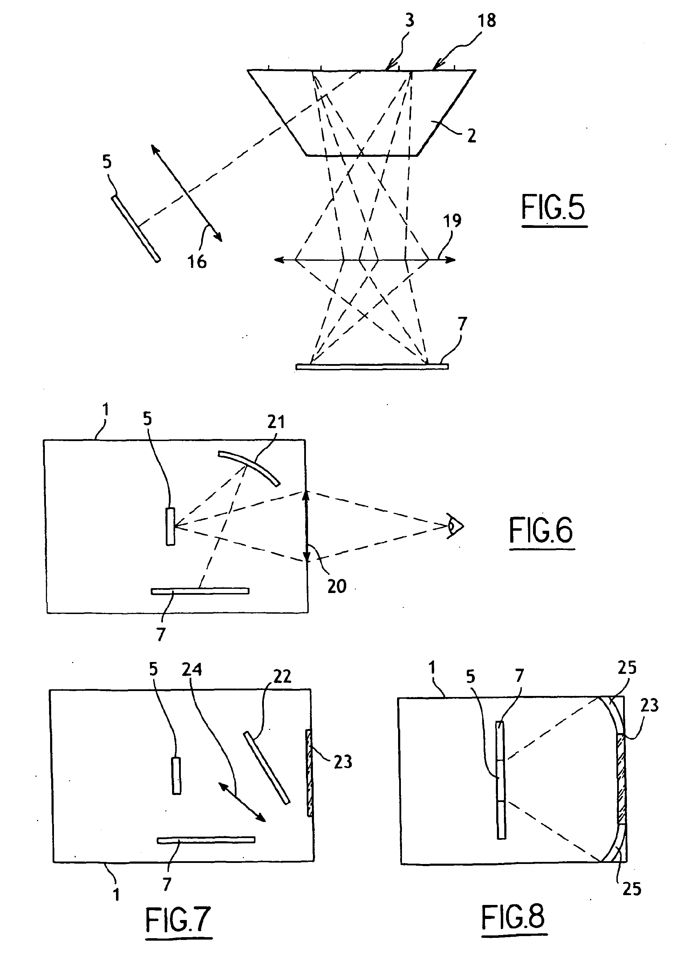

Selon la troisième variante de réalisation représentée à la figure 5, la zone de détection 3 du prisme 2 est bordée par une surface réfléchissante 18 couverte par le champ du capteur 5 qui est disposé avec un élément optique de focalisation 16 en regard d'une face latérale du prisme 2. L'unité de commande 7 et un élément optique de focalisation 19 sont disposés successivement en regard de la face inférieure du prisme 2 de manière que des portions de l'unité de commande 7 se reflètent nettement dans la bordure réfléchissante 18.

Ainsi, le capteur 5 détecte simultanément (ou séquentiellement en variante) des caractéristiques optiques de l'empreinte figurant dans la zone de détection 3 et des caractéristiques optiques des portions de l'unité de commande 7 se réfléchissant dans la bordure réfléchissante 18.

Les éléments identiques ou analogues à ceux précédemment décrits porteront la même référence que ces derniers dans la description qui suit du deuxième mode de réalisation.

En référence à la figure 6, le dispositif conforme au deuxième mode de réalisation est agencé pour assurer une identification par reconnaissance d'iris.

Le dispositif comprend un boîtier 1, un capteur 5 et une unité de commande 7. Un élément optique de focalisation 20 est monté sur le boîtier 1 en regard du capteur 5 de manière qu'une image d'un iris d'un candidat à l'identification se forme nettement sur le capteur 5.

Un miroir de focalisation 21 est en outre disposé dans le champ du capteur 5 pour refléter vers le capteur 5 au moins une partie de l'unité de commande 7.

Ainsi, se trouvent dans le champ du capteur 5 : la zone de détection (zone où se situe l'iris, derrière l'élément optique de focalisation 20) et la partie de l'unité de commande 7 reflétée par le miroir de focalisation 21. Le fonctionnement du dispositif est identique à celui du premier mode de réalisation.

Selon une première variante (voir figure 7), un miroir 22 ou lame semi-réfléchissante est disposé entre le capteur 5 et un hublot 23 monté sur le boîtier 1 entre le capteur 5 et la zone de détection. Le miroir 22 est analogue au miroir 6 et disposé pour refléter au moins en partie l'unité de commande 7 vers le capteur 5. Un élément optique de focalisation 24 est ici monté entre le miroir 22 et l'unité de commande 7 pour permettre la formation d'une image nette sur le capteur 5. L'élément optique de focalisation 24 est facultatif. Le hublot 23 peut être remplacé par un élément optique de focalisation 20.

Selon une deuxième variante représentée à la figure 8, le hublot 23, monté sur le boîtier 1 entre le capteur 5 et la zone de détection, est bordé par une zone réfléchissante 25 conformée pour refléter vers le capteur 5 une image de l'unité de commande 7 qui est ici montée au voisinage du capteur 5, dans le plan de focalisation de la zone réfléchissante 25.

Bien entendu, l'invention n'est pas limitée au mode de réalisation décrit mais englobe toute variante entrant dans le cadre de l'invention telle que définie par les revendications.

En particulier, l'unité de commande peut être disposée au voisinage immédiat de la zone de détection d'empreinte. Il est possible de disposer l'unité de commande dans le champ du capteur après une réflexion sur une partie périphérique du prisme.

L'organe réfléchissant peut être omis ou avoir une forme en kaléidoscope, une forme incurvée, une forme semi-enveloppante, ouverte ou fermée, ou toute autre forme présentant notamment deux portions réfléchissantes de formes identiques ou différentes, formant un angle entre elles pour fournir deux angles de vue... La lentille peut avoir des propriétés optiques particulières permettant de faire ressortir, grossir ou masquer des parties de l'unité de commande. La lentille est également facultative.

La couche de protection peut être omise ou avoir une composition différente et, par exemple : être solide ou comporter une phase visqueuse et une phase solide, être opaque, incorporer des éléments phosphorescents...

La mémoire contenant les signatures ou caractéristiques optiques de référence peut être soit raccordée à demeure à l'unité de commande soit lui être associée temporairement (les signatures ou caractéristiques optiques de référence peuvent être mémorisées dans une carte magnétique ou une carte à circuit intégré, une clé électronique...), soit être à distance de l'unité de commande et être reliée à celle-ci par une liaison filaire ou aérienne.

Le module de comparaison des caractéristiques visuelles peut être indépendant du module de comparaison utilisé pour l'identification par reconnaissance d'empreinte et être par exemple constitué par le circuit intégré d'une carte à circuit intégré.

Le dispositif peut ne comprendre qu'un élément d'illumination de l'unité de commande. Les diodes 12 peuvent être disposées en surface de l'unité de commande 7.

L'invention est utilisable pour les dispositifs de capture d'empreinte au sens général de ce mot, à savoir les empreintes digitales, les empreintes iriennes (reconnaissance des iris), les empreintes faciales (reconnaissance des visages)...

Les positions du prisme 2 et de l'unité de commande 7 peuvent être échangées.

## Revendications

1. Dispositif de capture de caractéristiques biométriques, comprenant un capteur optique (5) ayant un champ couvrant une zone de détection (3) des caractéristiques optiques et une unité de commande (7), électronique, reliée au capteur pour commander celui-ci, **caractérisé en ce que** l'unité de commande est disposée au moins partiellement dans le champ du capteur et comprend une mémoire (15) contenant au moins une signature résultant d'au moins une caractéristique optique de référence de l'unité de commande vue par le capteur et un module de comparaison (14) de la signature avec au moins une signature correspondante résultant d'au moins une caractéristique optique de l'unité de commande fournie par le capteur.

2. Dispositif selon la revendication 1, dans lequel le module de comparaison (14) est agencé également pour comparer des caractéristiques biométriques extraites d'images fournies par le capteur (5) à des caractéristiques biométriques mémorisées.

3. Dispositif selon la revendication 1, comprenant un miroir (6) disposé entre le capteur (5), l'unité de commande (7) et la zone de détection (3) et agencé pour permettre une visualisation de ces dernières par réflexion pour l'une et par transmission pour l'autre.

4. Dispositif selon la revendication 3, dans lequel le miroir (6) est un miroir semi-réfléchissant.

5. Dispositif selon la revendication 1, comprenant un organe réfléchissant (8) entourant au moins partiellement l'unité de commande (7).

6. Dispositif selon la revendication 5, dans lequel l'organe réfléchissant (8) comprend une pluralité de facettes réfléchissantes (9) formant des angles entre elles de manière à fournir au capteur (5) différents angles de vue de l'unité de commande (7).

7. Dispositif selon la revendication 1, comprenant une lentille (10) disposée entre l'unité de commande (7) et le capteur (5) pour focaliser une image de l'unité de commande sur le capteur.

8. Dispositif selon la revendication 1, dans lequel l'unité de commande (7) est recouverte d'une couche de protection (11) ayant des caractéristiques optiques détectables par le capteur (5).

9. Dispositif selon la revendication 8, dans lequel la couche de protection (11) est en un matériau non opaque incorporant des éléments optiquement détectables.

10. Dispositif selon la revendication 9, dans lequel les éléments optiquement actifs comprennent des paillettes réfléchissantes.

11. Dispositif selon la revendication 10, comprenant au moins un élément d'illumination (12) de l'unité de commande (7) noyé dans la couche de protection (11).

12. Dispositif selon l'une des revendications 8 à 11, dans lequel la couche de protection (11) est en un matériau visqueux.

13. Dispositif selon la revendication 1, dans lequel le module de comparaison (14) est agencé pour effectuer la comparaison à chaque démarrage du dispositif.

14. Dispositif selon la revendication 1, dans lequel le module de comparaison (14) est agencé pour effectuer la comparaison périodiquement.

15. Dispositif selon la revendication 1, comprenant une pluralité d'éléments d'illumination (12) de l'unité de commande (7) qui sont pilotés par le module de comparaison (14) selon différentes configurations correspondants chacune à au moins une signature mémorisée.

16. Dispositif selon la revendication 1, dans lequel la mémoire (15) contient une pluralité de signatures résultant de plusieurs caractéristiques optiques de référence et le module de comparaison (14) est agencé pour sélectionner une signature mémorisée, isoler les caractéristiques optiques correspondantes parmi celles détectées par le capteur et comparer au moins une signature résultant des caractéristiques optiques détectées par le capteur à la signature mémorisée sélectionnée.

17. Dispositif selon la revendication 1, dans lequel l'unité de commande (14) est agencée pour bloquer le fonctionnement du dispositif lorsque la comparaison a un résultat négatif.

## Claims

1. A device for capturing biometric characteristics, the device comprising an optical sensor (5) having a field of view covering a detection zone (3) for detecting optical characteristics, and an electronic control unit (7) that is connected to the sensor in order to control it, the device being **characterized in that** the control unit is placed at least in part in the field of view of the sensor and includes a memory (15) containing at least one signature resulting from at least one reference optical characteristic of the control unit as seen by the sensor, and a comparator module (14) for comparing the signature with at least one corresponding signature that results from at least one optical characteristic of the control unit as supplied by the sensor.

2. A device according to claim 1, wherein the comparator module (14) is also arranged to compare biometric characteristics extracted from images provided by the sensor (5) with stored biometric characteristics.

3. A device according to claim 1, including a mirror (6) placed between the sensor (5), the control unit (7), and the detection zone (3), and arranged to enable the control unit and the detection zone to be viewed, one in reflection and the other in transmission.

4. A device according to claim 3, wherein the mirror (6) is a semi-reflecting mirror.

5. A device according to claim 1, including a reflecting member (8) surrounding at least part of the control unit (7).

6. A device according to claim 5, wherein the reflecting member (8) comprises a plurality of reflecting facets (9) forming angles between one another so as to provide the sensor (5) with different angles of view of the control unit (7).

7. A device according to claim 1, including a lens (10) disposed between the control unit (7) and the sensor (5) to focus an image of the control unit on the sensor.

8. A device according to claim 1, wherein the control unit (7) is covered in a protective layer (11) having optical characteristics that are detectable by the sensor (5).

9. A device according to claim 8, wherein the protective layer (11) is made of a non-opaque material incorporating optically detectable elements.

10. A device according to claim 9, wherein the optically active elements comprise reflecting flakes.

11. A device according to claim 10, including at least one lighting element (12) for lighting the control unit (7), the element being embedded in the protective layer (11).

12. A device according to any one of claims 8 to 11, wherein the protective layer (11) is made of a viscous material.

13. A device according to claim 1, wherein the comparator module (14) is arranged to perform a comparison each time the device is started.

14. A device according to claim 1, wherein the comparator module (14) is arranged to perform a comparison periodically.

15. A device according to claim 1, including a plurality of lighting elements (12) for lighting the control unit (7) and controlled by the comparator module (14) to take on different configurations, each corresponding to at least one stored signature.

16. A device according to claim 1, wherein the memory (15) contains a plurality of signatures resulting from a plurality of reference optical characteristics, and the comparator module (14) is arranged to select a stored signature, to isolate the corresponding optical characteristics from amongst those detected by the sensor, and to compare at least one signature resulting from the optical characteristics detected by the sensor with the selected stored signature.

17. A device according to claim 1, wherein the control unit (14) is arranged to prevent the device from operating when the comparison gives a negative result.

## Patentansprüche

1. Sensorvorrichtung zum Erfassen biometrischer Eigenschaften, umfassend einen optischen Sensor (5), der ein Sichtfeld hat, das eine Detektionszone (3) zur Detektion optischer Eigenschaften sowie eine elektronische Steuereinheit (7) abdeckt, die mit dem Sensor verbunden ist, um diesen zu steuern, **dadurch gekennzeichnet, dass** die Steuereinheit zumindest teilweise in dem Sichtfeld des Sensors angeordnet ist und einen Speicher (15) umfasst, der mindestens eine Signatur enthält, die aus mindestens einer optischen, von dem Sensor erfassten Referenzeigenschaft der Steuereinheit resultiert, sowie ein Vergleichsmodul (14) zum Vergleichen der Signatur mit mindestens einer entsprechenden Signatur, die aus mindestens einer optischen Eigenschaft der Steuereinheit resultiert, die von dem Sensor geliefert wird.

2. Vorrichtung nach Anspruch 1, wobei das Vergleichsmodul (14) ferner dazu ausgebildet ist, biometrische Eigenschaften, die aus von dem Sensor (5) gelieferten Bildern extrahiert werden, mit gespeicherten biometrischen Eigenschaften zu vergleichen.

3. Vorrichtung nach Anspruch 1, umfassend einen Spiegel (6), der zwischen dem Sensor (5), der Steuereinheit (7) und der Detektionszone (3) angeordnet und dazu ausgebildet ist, eine Visualisierung dieser letztgenannten durch Reflexion für die eine und durch Transmission für die andere zu ermöglichen.

4. Vorrichtung nach Anspruch 3, wobei der Spiegel (6) ein halbreflektierender Spiegel ist.

5. Vorrichtung nach Anspruch 1, umfassend ein reflektierendes Element (8), das die Steuereinheit (7) zumindest teilweise umgibt.

6. Vorrichtung nach Anspruch 5, wobei das reflektierende Element (8) eine Vielzahl reflektierender Facetten (9) umfasst, die zueinander Winkel bilden, um so dem Sensor (5) ein Bild der Steuereinheit (7) unter verschiedenen Blickwinkeln zu liefern.

7. Vorrichtung nach Anspruch 1, umfassend eine Linse (10), die zwischen der Steuereinheit (7) und dem Sensor (5) angeordnet ist, um ein Bild der Steuereinheit auf dem Sensor zu fokussieren.

8. Vorrichtung nach Anspruch 1, wobei die Steuereinheit (7) mit einer Schutzschicht (11) überzogen ist, die von dem Sensor (5) erfassbare optische Eigenschaften hat.

9. Vorrichtung nach Anspruch 8, wobei die Schutzschicht (11) aus einem durchsichtigen Material besteht, das optisch erfassbare Elemente aufnimmt.

10. Vorrichtung nach Anspruch 9, wobei die optisch aktiven Elemente reflektierende Pailletten umfassen.

11. Vorrichtung nach Anspruch 10, umfassend mindestens ein Beleuchtungselement (12) zum Beleuchten der Steuereinheit (7), das in die Schutzschicht (11) eingebettet ist.

12. Vorrichtung nach einem der Ansprüche 8 bis 11, wobei die Schutzschicht (11) aus einem viskosen Material ist.

13. Vorrichtung nach Anspruch 1, wobei das Vergleichsmodul (14) dazu ausgebildet ist, den Vergleich bei jedem Start der Vorrichtung durchzuführen.

14. Vorrichtung nach Anspruch 1, wobei das Vergleichsmodul (14) dazu ausgebildet ist, den Vergleich periodisch durchzuführen.

15. Vorrichtung nach Anspruch 1, umfassend eine Vielzahl von Beleuchtungselementen (12) zum Beleuchten der Steuereinheit (7), die von dem Vergleichsmodul (14) in unterschiedlichen Konfigurationen gesteuert werden, die jeweils mindestens einer gespeicherten Signatur entsprechen.

16. Vorrichtung nach Anspruch 1, wobei der Speicher (15) eine Vielzahl von Signaturen enthält, die aus mehreren optischen Referenzeigenschaften resultieren, und das Vergleichsmodul (14) dazu ausgebildet ist, eine gespeicherte Signatur auszuwählen, die entsprechenden optischen Eigenschaften unter denjenigen, die von dem Sensor erfasst werden, zu isolieren und mindestens eine Signatur, die aus den von dem Sensor erfassten optischen Eigenschaften resultiert, mit der ausgewählten gespeicherten Signatur zu vergleichen.

17. Vorrichtung nach Anspruch 1, wobei die Steuereinheit (14) dazu ausgebildet ist, den Betrieb der Vorrichtung zu stoppen, wenn der Vergleich ein negatives Ergebnis hat.
